# EUROPEAN PATENT SPECIFICATION

(11) **EP 1 686 735 B1**
(45) Date of publication and mention of the grant of the patent: **30.09.2009**
(21) Application number: 05001930.6
(22) Date of filing: 31.01.2005
(51) Int. Cl.: H04L 12/56

(54) **Information transmission network**
Informationsübertragungsnetzwerk
Réseau de transmission d'information

(43) Date of publication of application: 02.08.2006
(73) Proprietor: CREATE-NET, 38100 Trento (IT)
(72) Inventor: Chlamtac, Imrich, 38050 Cognola TN (IT); Wösner, Hagen, Dr., 38100 Trento TN (IT); Kiraly, Csaba, 38050 Povo di Trento (IT); Carreras, Iacopo, 38100 Trento (IT)
(74) Representative: Gervasi, Gemma

(56) References cited:
- DE-A1- 10 126 618
- US-A1- 2003 146 850
- US-B1- 6 470 189

## Description

This invention is related to the management of information generated, captured, transmitted, or otherwise manipulated by pervasive computing devices.

Wireless Sensor Networks (WSN) have been investigated in their various forms for over a dozen years as they are considered to be a major step towards pervasive computing. The common general concept of WSN today is that sensors are not just the source of data but are also participating in the transport of data, typically in a multi-hop fashion from the point of origin to the point of use which is in most cases a central server that processes the collected data. To perform this function, all sensors are addressable from the network, communicate with each other, and form a communication network.

A flat wireless sensor network architecture is an homogeneous network, where all nodes are identical in terms of battery and hardware complexity, except for the sink which acts as a gateway being the one responsible for forwarding the collected information to the final user. According to [1] for any loss index n, the energy costs of transmitting a bit in a multi-hop fashion can always be made linear with distance, while the signal energy decays as the 4th power of distance. A flat wireless sensor network, composed of a large number of nodes (up to millions) leads to a number of challenges in terms of network management and organization, including the management of the sensor nodes, the gathering of information, throughput, routing, energy optimization, etc..

A hierarchical architecture [2] has been developed to reduce the cost and complexity of "'most of the sensor nodes" by introducing a set of more expensive and powerful 'sensor' nodes, thus creating an infrastructure that offloads many of the networking functions from the majority of simpler and lower cost sensors. The hierarchical architecture consists of multiple layers: a sensor layer (SN), a forwarding layer (FN), and Access Point layer (AP). Sensor nodes can only sense the environment and communicate the collected information to the forwarding nodes. Forwarding nodes communicate among themselves and with Access Points, the highest tier in the network and the communication points with the backbone.

In the field of multihop peer to peer communication US6470189 discloses a method and apparatus for transferring information between a transceiver and a network server, US2003/0146850 discloses a method for communication between vehicles and other systems including the to transmit and receive information, in particular emergency information.
DE1026618 also discloses a wireless peer to peer ad hoc network comprising sensors that send information data related to a particular zone (paragraph 22) to mobile nodes.

To further reduce energy consumption, in particular in sparse sensor networks, in [3] an architecture with three levels of hierarchy has been proposed, in which mobile agents that periodically pass by the sensors, collect their data and finally drop off the collected data to wired access points when in their proximity. Results show that trading off the amount of buffering at both the sensor nodes level and at the MULE (Mobile Ubiquitous LAN Extensions) level, acceptable data success rates can be obtained. A similar approach to simplifying the requirement of individual sensor nodes has been proposed in [4]. Termed the Sensor Networks with Mobile Agents (SENMA), ALOHA protocol is used for communication between the sensors and powerful mobile agents eliminating the need for multihop sensor communication and reducing energy consumption.

In summary, in all instances, in building a conventional WSN the resulting node architecture becomes similar to the traditional Internet node [5]. This means that a multi-layer networking stack is implemented in each sensor node, that allows not only for some (limited) processing, but also for the routing of data and eventually even for reliable transport protocols such as TCP. The need for sensor to sensor communication, or network connectivity, results in huge number of devices to cover even a small to medium size city. Whereas sensors in almost all applications, e.g. measuring pollution or other environmental, health, risk or security environments, only one sensor per several, potentially hundred, square meters is required. Sensor nodes are battery driven and therefore operate on an extremely frugal energy budget. Energy optimization becomes crucial in maximizing the lifetime of the entire network and has therefore been long considered a key design objective in research related to wireless sensor networks [6]. To cost effectively deploy sensors in a conventional network scenario, sensors have to come at an ultra-low price, their deployment should be easy like *smart dust* [7], price per sensor should be below $1, and their battery should be small, efficient and able to support the transmission of millions of control and data messages per minute to support data transmission, self organization, route discovery and maintenance, clustering, routing, TCP, and relaying of information, all growing with the size of the network. Not surprisingly with conventional WSN, sensor prices are two orders of magnitude away, high degree of integration of the sensors remains a challenge, with battery making up about 50% of the volume of sensor nodes. For a commercial application of sensor networks this means that the cost of the full sensor network and the deployment is prohibitive not only due to the high one time cost of placing thousands and millions of sensor in a city environment, but also due to the high replacement cost.

To allow sensors or any other similar information collecting and generating devices on a large scale to become part of our emerging intelligent pervasive environment in which CAPEX and OPEX are key factors to adoption, a fundamentally different solution is therefore required. It is an objective of the present invention to solve the problems present in the prior art by providing a method that can gather and deliver information from different information sources to nodes of the network without building a connected network and without relying on packet forwarding. This objective is achieved by the method as claimed in the main claim. Preferred embodiments of this method are defined in the secondary claims.

The method in the present invention is based on the observation of the necessity to introduce hierarchy in the network, to simplify the role of the sensor and to exploit the mobility of nodes to spread information.

Specifically, a 2-level architecture is defined to manage information. Devices forming the network are divided into two classes based on their functionality:
- *Information sources* that have the task of providing information about the environment and transmitting the gathered information to the user nodes.
- *User nodes* that are interested in information originated from information sources in order to provide services to the user. These nodes have the task of collecting information from the information sources and to exchange the gathered information with other user nodes while moving in the environment.

Information is delivered from information sources to user nodes without building a connected network, though communication between information sources and user nodes in their vicinity, through the movement of these user nodes carrying the information beyond the communication range of the information source, and through a series of peer-to-peer information exchange between user nodes.
The communication between a user node and an information source is based on the vicinity of the two devices, using direct communication between the information source and the user node and does not require any (ISO/OSI) layer 3 functionality. Information sources do not need a node address, but should have some ID to mark their geographic place. This might be imprinted at the installation time.\
There are MAC- and PHY-layer ways of accomplishing this. The MAC-layer way would mean for the mobile user node to send out beacons in regular intervals and for the sensors to wake up periodically and perform some idle listening on the channel. After reception of a beacon the sensor should answer immediately and wait for an ACK before going to sleep again. No complex MAC protocols to mitigate the effect of collisions or hidden terminals are needed here, simply because there will be a very low number of sensors in the reach of a user node. This way, however, the sensor would spend considerable time listening to the channel, which reduces sensor life time. The PHY layer way means that the sensor is some kind of RFID with an active component to perform the sensing. The user node reads the RFID when it is close enough. Long sensor life times can be achieved, because almost no energy is wasted for communication.
In this architecture, most of the complexity of the network resides in the user nodes. User nodes do not suffer from limited energy resources and computational capability and therefore have to:
- pick up the information from information source islands he encounters with his movement in the environment.
- exchange the gathered data with other user nodes that come into contact.
User nodes may be pedestrians walking around the city but also cars or busses or any kind of vehicle.

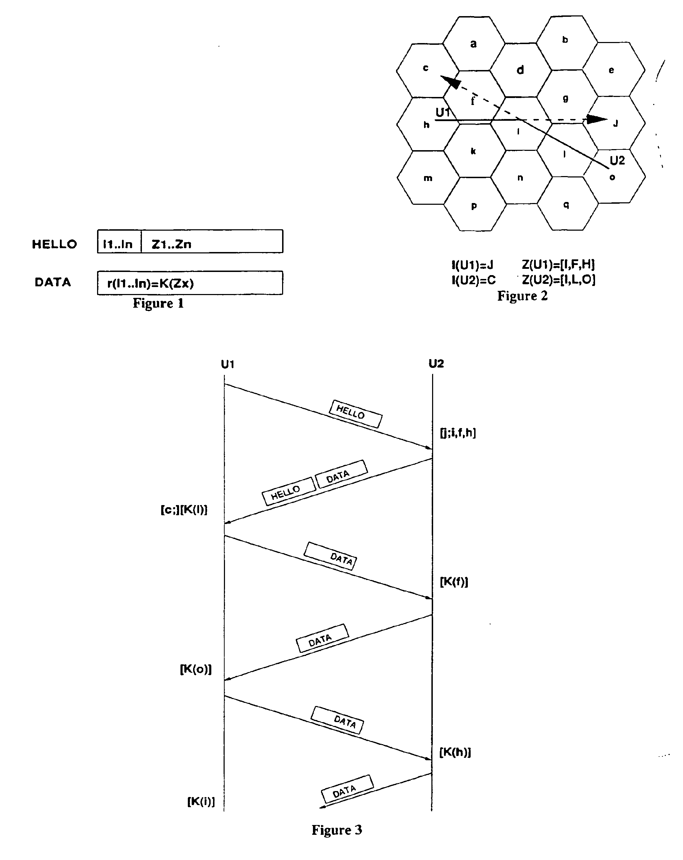

Information about the environment is highly localized and can be grouped into zones according to the geographic location of the information source.
1. The communication mechanism relies on nodes storing the following information:
2. Description of its interest: one possible realization of this description is as follows: The interest of node U is represented by the variable ***Iᵤ***. If the user is interested in information about one zone, ***Iᵤ*** takes the value of the zone identifier of that zone. Otherwise he is not interested in any special zone, which is represented by a special value of ***Iᵤ***. Note that these zones are not necessarily defined geographically (as depicted in Fig. 2), but can express arbitrary topics of interest.
3. Its knowledge about zones: the node can gather information about zones either directly by passing the zone and reading information sources there, or indirectly by receiving information from other nodes. One possible representation of this knowledge is a list of the identifiers of known zones ***Zᵤ**= [Z₁, Z₂, ... Zₙ]* and the corresponding knowledge ***Kᵤ**= [K(Z₁), K(Z₂), ... K(Zₙ)]*
4. A function ***r(Iᵤ)*** that orders the available information ***Kᵤ*** in a node U with respect to a given interest I with decreasing relevance. This means that the most relevant answer to a certain interest would be assigned the highest value of ***r*.**

The following description of a preferred embodiment refers to the enclosed drawings.
- Fig. 1 shows the formats of the packets used in the information exchange
- Fig. 2 shows a scenario of two user nodes with different start- and destination zones that meet and exchange packets
- Fig. 3 shows the corresponding peer-to-peer information exchange between the nodes

Information is spread in the system as a series of similar peer-to-peer exchanges as U-nodes move around and arrive to the vicinity of other U-nodes. We consider two nodes U₁ and U₂. Peer-to-peer information exchange is accomplished in the following steps:
1. U₁ sends a HELLO packet. This packet contains the description of its interest (i.e. identifier of its destination zone, if there is any), and a high level description of its knowledge (i.e. an ordered list of the identifiers of those zones of which he has detailed information). The structure of the hello packet can be described as ***[Iᵤ₁, Zᵤ₁]*** (see Fig. 1). This packet can be directed to a U-node nearby, multicast or broadcast depending on the transmission technology used.
2. After U₂ receives the packet, it decides whether it wants to respond to this message based on its r function. ***r*** is a function of ***Iᵤ₁, Zᵤ₁**, **Zᵤ₂**.*
3. If the result of ***r*** is positive U₂ replies with a hello packet, having the same structure as before *[**Iᵤ₂,Zᵤ₂**].* The second part of the packet may be empty as shown in Fig. 3. It makes sense to give the information in this part of the HELLO packet if other user nodes than U₁ are present. The role of ***r*** is to rank ***Kᵤ₂*** in an order of relevance to U1 according to all the information known about U_{1.} ***Kᵤ₂*** is not just ranked, but it is also split into reasonably sized packets, thus the result of ***r*** can be delivered as a sequence of DATA packets of the form *[K(I₁)],[K(I₂)],* so on.
4. After U₁ receives the hello packet ***[Iᵤ₂,Zᵤ₂]*** and the information packet *[K(I₁)]* it runs its own ***r*** function to determine whether it is interested in the communication and how should it react. If the decision is positive, the sequence *[K(I₁)],[K(I₂)]* is determined and alternatingly sent to U2.

In the following steps U₁ and U₂ exchange information according to their ***r*** function until either they leave their communication range or no more relevant information is available.

### Cited Documents

□1 ] M. Bhardwaj and A. Chandrakasan, "Bounding the lifetime of sensor networks via optimal role assignments", in Proc. of IEEE InfoCom, 2002, available online:http://citeseer.ist.psu.edu/article/bhardwaj02bounding.html
□2] S. Zhao, K. Tepe, I. Seskar and D. Raychaudhuri, "Routing protocols for self-organizing hierarchical ad-hoc wireless networks", in IEEE Sarnoff 2003 Symposium, March 2003, pp. 65-68
□3] R.C. Shah, S. Roy, S. Jian and W. Brunette, "Data MULEs: modeling a three-tier architecture for sparse sensor networks", in Proc. of the IEEE Workshop on Sensor Network Protocols and Applications (SNPA), May 2003, pp. 30-41
□4] Lang Tong and Qing Zhao and Srihari Adireddy, "Sensor networks with mobile agents", in Proc. of MILCOM 2003 - IEEE Military Communications Conference, October 2003, pp. 688-693
□5] Ian F. Akyildiz and Weilian Su and Yogesh Sankarasubramaniam and Erdal Cayirci, "Wireless sensor networks: a survey", Computer Networks, vol. 38, pp. 70-84
□6] I. Chlamtac, C. Petrioli and J. Redi, "An Energy-Conserving Access Protocol for Wireless Communications", in Proc. of the 7th annual international conference on Mobile computing and networking, June 1997, ISBN 1-58113-422-3, Montreal, Quebec, Canada
□7] J. M. Kahn and R. H. Katz and K. S. J. Pister, "Next Century Challenges: Mobile Networking for "Smart Dust" ", in International Conference on Mobile Computing and Networking (MOBICOM), 1999, pp. 271-278

## Claims

1. A method for exchanging information data in a peer to peer based wireless multihop ad hoc network comprising sensors and mobile user nodes (U₁,U₂),
wherein
- said sensors wake up periodically and transmit information data to said mobile user nodes,
- said information data relate to information about the zone (a,b,c...) where said sensors are set,
- said information data being ordered in each mobile user node with decreasing relevance with respect to a given user interest by employing a function of interest,
- said mobile user nodes (U₁, U₂) exchange information data between at least a first and a second user node, (U₁, U₂)
- said information data being transmitted by said first user node (U₁) to said second user node (U₂) after having being ranked and split in data packets , and
- said information data being alternatingly exchanged between said first (U₁) and second user nodes (U₂) according to the rank of said function of interest of each user nodes until users leave the communication range so that the information having the highest interest of each user node is exchanged first.

2. The method of claim 1 wherein said packets are formed by:
a first packet and further data packets wherein the first packet contains a description of user interest and an ordered list of identifiers of known zones

3. The method of claim 2, wherein said second user node decides to respond to the information data coming from the first user node on the basis of the function of interest of said second user node, after having analyzed said data sent by said first user containing a description of user interest and an ordered list of identifiers of known zones

4. The method of claim 3 wherein said sensors wake up after reception of a beacon from the user node and goes to sleep after reception of the ACK

## Patentansprüche

1. Verfahren zum Austauschen von Informationsdaten in einem drahtlosen Mehrsprungverbindungs-Ad-hoc-Netz auf Peer-to-Peer-Grundlage, das Sensoren und Mobilfunkteilnehmerknoten (U₁, U₂) umfasst,
wobei
- die genannten Sensoren periodisch aufwachen und Informationsdaten an die genannten Mobilfunkteilnehmerknoten senden,
- sich die genannten Informationsdaten auf Informationen über die Zone (a, b, c) beziehen, in die die genannten Sensoren gesetzt sind,
- die genannten Informationsdaten in jedem Mobilfunkteilnehmerknoten unter Nutzung einer Interessenfunktion mit abnehmender Relevanz in Bezug auf ein gegebenes Teilnehmerinteresse geordnet werden,
- die genannten Mobilfunkteilnehmerknoten (U₁, U₂) wenigstens zwischen einem ersten und einem zweiten Teilnehmerknoten (U₁, U₂) Informationsdaten austauschen,
- die genannten Informationsdaten durch den genannten ersten Teilnehmerknoten (U₁) an den genannten zweiten Teilnehmerknoten (U₂) gesendet werden, nachdem sie in einen Rang eingereiht und in Datenpakete aufgeteilt worden sind, und
- die genannten Informationsdaten gemäß dem Rang der genannten Interessenfunktion jedes Teilnehmerknotens abwechselnd zwischen dem genannten ersten (U₁) und dem genannten zweiten (U₂) Teilnehmerknoten ausgetauscht werden, bis die Teilnehmer den Kommunikationsbereich verlassen, sodass die Informationen mit dem höchsten Interesse jedes Teilnehmerknotens zuerst ausgetauscht werden.

2. Verfahren gemäß Anspruch 1, bei dem die genannten Pakete gebildet werden durch: ein erstes Paket und weitere Datenpakete, wobei das erste Paket eine Beschreibung des Teilnehmerinteresses und eine geordnete Liste von Identifizierem bekannter Zonen enthält.

3. Verfahren gemäß Anspruch 2, bei dem der genannten zweite Teilnehmerknoten auf der Grundlage der Interessenfunktion des genannten zweiten Teilnehmerknotens entscheidet, auf die von dem ersten Teilnehmerknoten kommenden Informationsdaten zu antworten, nachdem er die durch den genannten ersten Teilnehmer gesendeten genannten Daten, die eine Beschreibung des Teilnehmerinteresses und eine geordnete Liste von Identifizierern bekannter Zonen enthalten, analysiert hat.

4. Verfahren gemäß Anspruch 3, bei dem die genannten Sensoren nach Empfang einer Bake von dem Teilnehmerknoten aufwachen und nach Empfang des ACK in den Schlaf gehen.

## Revendications

1. Procédé d'échange de données d'informations dans un réseau ad hoc sans fil multisaut point à point comprenant des capteurs et des noeuds d'utilisateurs mobiles (U₁, U₂),
dans lequel
- lesdits capteurs se réveillent périodiquement et transmettent des données d'informations auxdits noeuds d'utilisateurs mobiles,
- lesdites données d'informations concernent des informations concernant la zone (a, b, c ...) où lesdits capteurs sont placés,
- lesdites données d'informations étant ordonnées dans chaque noeud d'utilisateur mobile par intérêt décroissant par rapport à un intérêt d'utilisateur donné en utilisant une fonction d'intérêt,
- lesdits noeuds d'utilisateurs mobiles (U₁, U₂) échangent des données d'informations entre au moins un premier et un deuxième noeud d'utilisateur (U₁, U₂),
- lesdites données d'informations étant transmises par ledit premier noeud d'utilisateur (U₁) audit deuxième noeud d'utilisateur (U₂) après avoir été classées et divisées en paquets de données, et
- lesdites données d'informations étant échangées alternativement entre lesdits premier (U1) et deuxième (U2) noeuds d'utilisateurs en fonction du classement de ladite fonction d'intérêt de chaque noeud d'utilisateur jusqu'à ce que les utilisateurs quittent la plage de communication, de sorte que les informations ayant l'intérêt le plus élevé de chaque noeud d'utilisateur sont échangées en premier.

2. Procédé selon la revendication 1, dans lequel lesdits paquets sont formés par :
un premier paquet et d'autres paquets de données, dans lequel le premier paquet contient une description d'intérêt d'utilisateur et une liste ordonnée d'identifiants de zones connues.

3. Procédé selon la revendication 2, dans lequel ledit deuxième noeud d'utilisateur décide de répondre aux données d'informations provenant du premier noeud d'utilisateur sur la base de la fonction d'intérêt dudit deuxième noeud d'utilisateur, après avoir analysé lesdites données envoyées par ledit premier utilisateur contenant une description d'intérêt d'utilisateur et une liste ordonnée d'identifiants de zones connues.

4. Procédé selon la revendication 3, dans lequel lesdits capteurs se réveillent après avoir reçu une balise du noeud d'utilisateur et se rendorment après avoir reçu l'acquittement.
